(19) **Europäisches Patentamt**

**European Patent Office**

**Office européen des brevets**

(11) **EP 1 124 146 B1**

(12) **EUROPÄISCHE PATENTSCHRIFT**

(45) Veröffentlichungstag und Bekanntmachung des Hinweises auf die Patenterteilung:
**24.10.2001 Patentblatt 2001/43**

(51) Int Cl.7: **G02B 6/25**, G02B 6/24, G01J 3/02

(21) Anmeldenummer: **00102911.5**

(22) Anmeldetag: **12.02.2000**

(54) **Optisches Spektrometer mit Lichtwellenleiter**

Optical spectrometer with optical waveguide

Spectromètre optique avec guide d'onde optique

(84) Benannte Vertragsstaaten:
**DE FR GB IT**
Benannte Erstreckungsstaaten:
**AL LT LV MK RO SI**

(43) Veröffentlichungstag der Anmeldung:
**16.08.2001 Patentblatt 2001/33**

(73) Patentinhaber: **Acterna Eningen GmbH**
**72800 Eningen (DE)**

(72) Erfinder: **Fuhrmann, Thomas, Dipl.-Ing.**
**72800 Eningen (DE)**

(74) Vertreter: **KOHLER SCHMID + PARTNER**
**Patentanwälte**
**Ruppmannstrasse 27**
**70565 Stuttgart (DE)**

(56) Entgegenhaltungen:
**EP-A- 0 396 507          WO-A-98/55891**
**US-A- 5 800 249**

**Beschreibung**

Die Erfindung betrifft optisches Spektrometer mit einem Lichtwellenlej Bei einem optischen Spektrum-Analysator ist am Ausgang seiner Optik im Lichtpfad ein Ausgangsspalt erforderlich, um eine Wellenlängenselektion zu erzielen. Die Breite des Ausgangsspaltes bestimmt mit den anderen Parametern der Optik die Wellenlängenauflösung des Spektrum-Analysators. Für eine hohe Wellenlängenauflösung bei möglichst kleiner Baugröße ist es vorteilhaft, wenn die Optik des Spektrum-Analysators beugungsbegrenzt ist, d.h., nicht durch die Fehler der Optik, sondern durch die Wellennatur des Lichts ist die Auflösung begrenzt.

Beispielsweise sind ähnliche Aufbauten für Monochromatoren aus EP 0 396 507 bekannt.

In der optischen Nachrichtentechnik ist es üblich, Licht mit einer Wellenlänge von ca. 1,25 μm bis ca. 1,65 μm in einen Singlemode-Glasfaser-Lichtwellenleiter einzukoppeln. In diesem Fall wird die optimale Wellenlängenauflösung bei einer Spaltbreite von ca. 10 μm erreicht. Bei noch kleineren Spaltbreiten wird die Wellenlängenauflösung nicht mehr besser, sondern es steigt dann nur noch die Dämpfung.

Um einen Eingangsspalt für einen Lichtwellenleiter herzustellen, ist es bekannt, einen freitragenden Spalt in Form einer dünnen Metallfolie zu verwenden. Durch entsprechende Bearbeitung, z.B. mittels eines Hochleistungslasers, wird in der Metallfolie ein Spalt mit der gewünschten Breite erzeugt. Allerdings verursacht dieser Spalt unerwünschte polarisationsabhängige Verluste (engl.: Polarization Dependent Loss (PDL)). Diese PDL-Verluste sind um so höher, je dicker die Folie und je schmaler der Spalt ist. Die PDL-Verluste werden insbesondere dann sehr hoch, wenn die Spaltbreite in den Bereich der Beugungsbegrenzung kommt.

Eine solche Metallblende kann auch am Ende des Lichtwellenleiters justiert und festgeklebt werden. Allerdings sind Justierung und Klebung der Metallblende mit relativ viel Aufwand verbunden, und zusätzlich verursacht die reflektierende Metallblende unerwünschte Rückreflexionen.

Schließlich kann als Eingangsspalt auch die Singlemode-Glasfaser selbst verwendet werden, deren Kerndurchmesser ca. 9 μm (bei einem Modenfelddurchmesser von ca. 10,5 μm und einer Wellenlänge von 1,55 μm) beträgt. Allerdings ist der Ausgangsspalt dann kreisförmig, so daß bereits bei einer kleinen Veränderung des eintretenden Lichtstrahls relativ zum Ausgangsspalt senkrecht zur Dispersionsrichtung des Lichtes eine hohe Zunahme der Dämpfung auftritt. Bei Veränderung der Umgebungsbedingungen (z.B. Temperatur, Alterung) oder bei mechanischen Belastungen (z.B. Schock, Vibration) ist daher die Gefahr sehr hoch, daß eine Leistungsanzeige einen falschen Wert anzeigt.

Demgegenüber ist es die Aufgabe der Erfindung, ein Spektrometer mit einem Lichtwellenleiter der eingangs genannten Art mit einem Eingangsspalt auszubilden, welcher eine geringe Rückreflexion besitzt und mit relativ geringem Aufwand hergestellt werden kann.

Diese Aufgabe wird gemäß den Merkmalen des Anspruchs 4 gelöst.

Bevorzugt ist dabei das Ende des Lichtwellenleiters nur an den beiden Längsseiten der rechteckig ausgebildeten Eintrittsfläche abgeschrägt und symmetrisch bezüglich einer Axialebene des Lichtwellenleiters.

Üblicherweise werden Glasfaser-Lichtwellenleiter am Ende gerade oder unter einem Winkel poliert. Wird die End- oder Stirnseite des Lichtwellenleiters an zwei einander diametral gegenüberliegenden Seiten schräg (z.B. jeweils unter 45°) anpoliert, so bleibt bei geeigneten Dimensionen und Winkeln in der Mitte des Lichtwellenleiters eine rechteckförmige Eintrittsfläche in Form eines Steges stehen, durch den Licht in den Kern des Lichtwellenleiters eingekoppelt werden kann. Nur das Licht, das auf diese Eintrittsfläche fällt, sollte in den Kern gelangen und dort geführt werden.

Für Licht mit einer Wellenlänge von ca. 1,25 μm bis ca. 1,65 μm, vorzugsweise von ca. 1,55 μm, ist bei Lichtwellenleitern mit einem Kerndurchmesser von ca. 50 μm die Eintrittsfläche und damit der wirksame Eingangsspalt bevorzugt ca. 10 μm breit. Wenn die Eintrittsfläche mindestens so lang wie der Kerndurchmesser des Lichtwellenleiters ist, ergibt sich eine Eintrittsfläche von ca. 10 μm x 50 μm, deren schmalere Seite die Wellenlängenauflösung bestimmt. Die längere Seite ist die Toleranzrichtung, in welcher der einzukoppelnde Lichtfleck wandern kann, ohne daß sich die eingekoppelte Leistung ändert. Obwohl ein Kerndurchmesser von ca. 50 μm bevorzugt ist, können prinzipiell auch Lichtwellenleiter mit größeren Kerndurchmessern verwendet werden.

Glasfaser-Lichtleiter mit typischen Manteldurchmessern von ca. 125 μm sind allerdings sehr schwer zu polieren, da sie sehr leicht brechen. Es ist deshalb vorteilhaft, wenn das Faserende in einer Halterung aufgenommen ist und zusammen mit der Halterung poliert wird. Als Halterung kann beispielsweise ein Stecker für das Faserende dienen, oder mehrere Glasfaser-Lichtleiter können in entsprechende Nuten zweier Sandwichplatten gelegt werden, die dann samt den darin aufgenommenen Faserenden schräg abgeschliffen werden.

Das Ende des Lichtwellenleiters ist so abgeschrägt, daß in die Schrägflächen einfallendes Licht möglichst nicht im Kern des Lichtwellenleiters weitergeführt wird. Die Winkel der Schrägflächen sind dabei so gewählt, daß das Licht, das über die Schrägflächen einfällt, nicht im Kern weitergeführt wird. Dabei sind steilere Winkel vorteilhaft, da das unerwünschte Licht in der Faser dann steil reflektiert wird und diese schnell wieder verläßt oder vernichtet wird und so möglichst wenig in den Kern überkoppelt. Das in die Schrägflächen eintretende Licht wird fort vom Kern gebrochen und im Mantel des Lichtwellenleiters bis zur Absorption geführt.

Eine weitere erfindungsgemäße Ausführungsform ist in Anspruch 1 definiert.

Die aufgedampfte lichtundurchlässige Metallschicht dient als Blende, so daß Licht in den Lichtwellenleiter nur über die Eintrittsfläche einkoppeln kann. Da die Dicke der aufgedampften Metallschicht im Vergleich zu einer Metallfolie sehr dünn ist, treten näherungsweise keine PDL-Verluste auf.

Die Erfindung betrifft ein optisches Spektrometer, insbesondere einen optischen Spektrum-Analysator, mit einem Detektor für das durch einen Ausgangsspalt hindurchtretende Licht, wobei erfindungsgemäß der Ausgangsspalt durch das wie oben beschrieben ausgebildete lichteintrittsseitige Ende eines Lichtwellenleiters gebildet ist, an dessen anderem Ende der Detektor angeordnet ist.

Durch den Lichtwellenleiter ist der Detektor samt zugehöriger Elektronik räumlich von der Optik des Spektrometers getrennt bzw. entkoppelt. Der Ausgangsspalt der Optik ist durch die vorzugsweise rechteckige Eintrittsfläche des abgeschrägten Lichtwellenleiters gebildet. Wenn die schmalere Spaltseite in der Größenordnung des Kerndurchmessers einer Singlemodefaser (ca. 10 μm bei Wellenlängen von ca. 1,55 μm) liegt, so kann eine hohe Wellenlängenauflösung erzielt werden. Innerhalb eines z.B. 50 μm langen Spalts kann der einzukoppelnde Lichtfleck senkrecht zur Dispersionsrichtung des Lichts dann in Längsrichtung entsprechend weit wandern, bis am Detektor eine Leistungsänderung auftritt.

Weitere Vorteile der Erfindung ergeben sich aus der Beschreibung und der Zeichnung. Die gezeigten und beschriebenen Ausführungsformen sind nicht als abschließende Aufzählung zu verstehen, sondern haben vielmehr beispielhaften Charakter für die Schilderung der Erfindung.

Es zeigt:

Fig. 1 ein erstes Ausführungsbeispiel eines Lichtwellenleiters in perspektivischer Ansicht;

Fig. 2 eine Seitenansicht des in Fig. 1 gezeigten Lichtwellenleiters;

Fig. 3 den typischen Aufbau eines optischen Spektrum-Analysators und mit dem in Fig. 1 gezeigten Lichtwellenleiter; und

Fig. 4 ein zweites Ausführungsbeispiel eines Lichtwellenleiters in perspektivischer Ansicht.

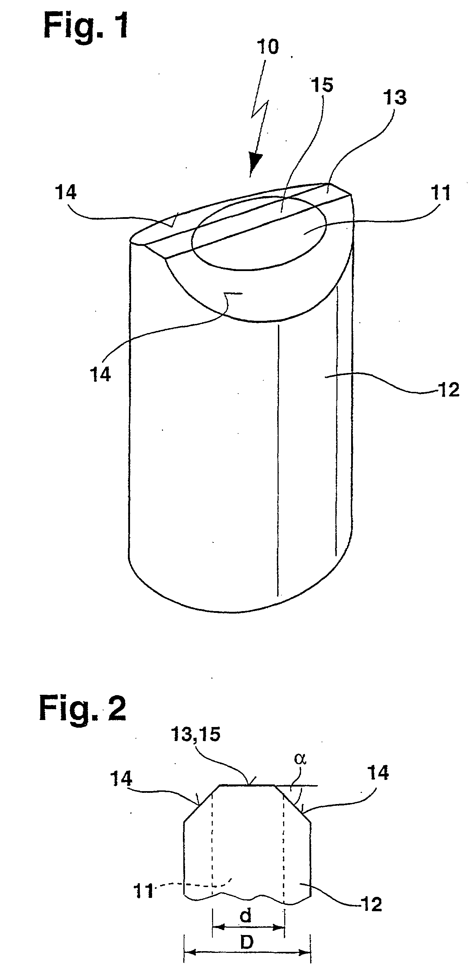

Der in **Fig. 1** und **Fig. 2** gezeigte Lichtwellenleiter **10** ist eine Glasfaser mit einem Kern **11** (Kernduchmesser **d**) und einem Mantel **12** (Manteldurchmesser D). Das dargestellte lichteintrittsseitige Ende des Lichtwellenleiters 10 ist dachförmig mit einer den "Dachfirst" bildenden ebenen Stegfläche **13** und zwei seitlichen Schrägflächen **14** ausgebildet.

Diese Dachform läßt sich herstellen, indem das Ende des Lichtwellenleiters an zwei einander diametral gegenüberliegenden Seiten z.B. durch Polieren so angeschrägt wird, daß stirnseitig in der Mitte des Lichtwellenleiters 10 die Stegfläche 13 in Form eines etwa rechteckigen Dachfirsts stehenbleibt. Die innerhalb des Kerndurchmessers d liegende Stegfläche 13 bildet eine näherungsweise rechteckige Eintrittsfläche **15**, durch die Licht in den Kern **11** einkoppeln kann. Die Schmalseite der rechteckigen Eintrittsfläche 15 ist kleiner als der Kerndurchmesser d, während ihre Längsseite etwa dem Kerndurchmesser d entspricht. Die Schmalseite ist die Dispersionsrichtung, die die Wellenlängenauflösung bestimmt. Die Längsseite ist die Toleranzrichtung, in der ein einzukoppelnder Lichtfleck wandern kann, ohne daß sich die eingekoppelte Leistung ändert.

Die Winkel der Schrägflächen 14 (im gezeigten Ausführungsbeispiel etwa 45°) sind so gewählt, daß möglichst alles Licht, das über die Schrägflächen 14 in den Lichtwellenleiter 10 einfällt, nicht im Kern 11 weitergeführt wird. Das in die Schrägflächen 14 eintretende Licht wird fort vom Kern 11 gebrochen und im Mantel 12 des Lichtwellenleiters 10 bis zur Absorption geführt. Die Eintrittsfläche bildet auf dem Lichtwellenleiter 10 somit eine Schlitzblende.

Für Licht mit einer Wellenlänge von ca. 1,25 μm bis ca. 1,65 μm, insbesondere von ca. 1,55 μm, ist die Eintrittsfläche 15 vorzugsweise ca. 10 μm schmal, so daß bei einem typischen Kerndurchmesser d von ca. 50 μm die Eintrittsfläche 15 ca. 10 μm x 50 μm beträgt.

Die Schrägflächen 14 sind vorzugsweise gegenüber der Eintrittsfläche 15 um einen Winkel α (Fig. 2) abgewinkelt, der folgender Ungleichung genügt:

$$\frac{n_{Cl}}{n_{Co}} > \sqrt{1 - \left[\frac{\sin(\alpha + \alpha_2)}{n_{Co}}\right]^2} * \cos(\alpha) + \frac{\sin(\alpha + \alpha_2)}{n_{Co}} * \sin(\alpha),$$

wobei $n_{Co}$ der Brechungsindex des Kerns 11, $n_{Cl}$ der Brechungsindex des Mantels 12 und $\alpha2$ der Einfallswinkel des Lichtstrahls zur Normalen der Eintrittsfläche 15 ist.

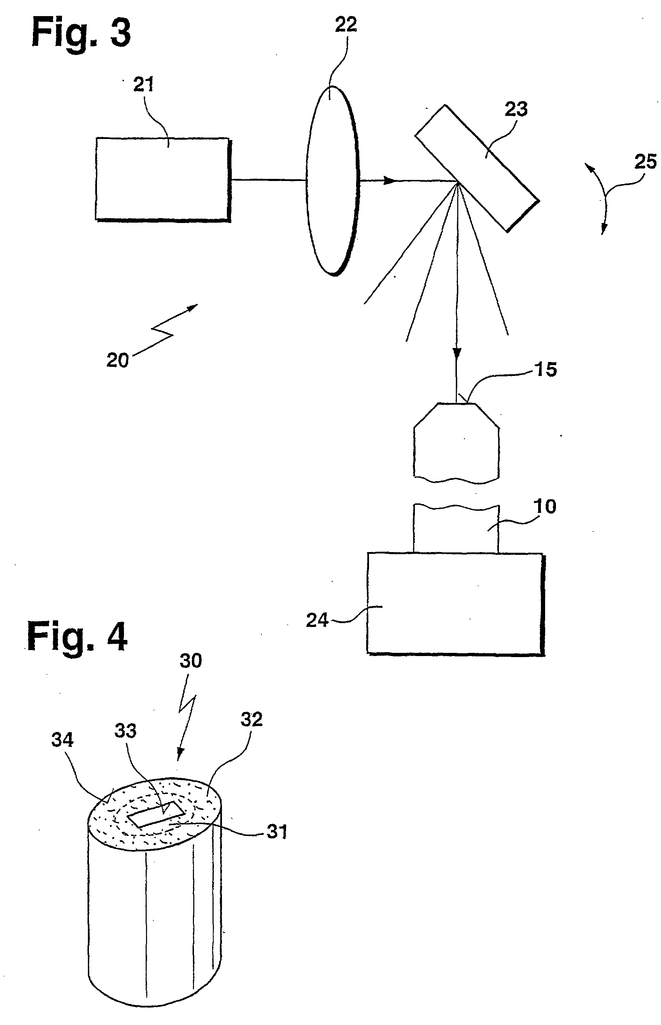

In **Fig. 3** ist der typische Aufbau eines optischen Spektrum-Analysators **20** gezeigt. Das über einen Eingangsspalt **21** eintretende Licht wird über eine Linse **22** auf ein optisches Reflexionsgitter **23** kollimiert, das die im Licht vorhandenen Wellenlängen unterschiedlich stark beugt. Nur das auf die Eintrittsfläche 15 des Lichtwellenleiters 10 auftreffende Licht wird zu einem Detektor **24** (z.B. eine Photodiode) weitergeleitet, so daß sich die Lichtintensität bei einer bestimmten Wellenlänge messen läßt. Durch Drehen des Reflexionsgitters 23 in Richtung des Doppelpfeils 25 kann die jeweils gemessene Wellenlänge geändert werden. Durch den Lichtwellenleiter 10 ist der Detektor 24 räumlich von der Optik des Spektrum-Analysators 20 getrennt bzw. entkoppelt. Der Ausgangsspalt der Optik ist durch die vorzugsweise rechteckige Eintrittsfläche 15 des abgeschrägten Lichtwellenleiters 10 gebildet. Wenn die Schmalseite der Eintrittsfläche 15 in der Größenordnung des beugungsbegrenzten Lichtstrahls (ca. 10 µm bei einer Wellenlänge von ca. 1,55 µm) liegt, kann die optimale Wellenlängenauflösung erzielt werden. Innerhalb einer z.B. 50 µm langen Eintrittsfläche 15 kann der einzukoppelnde Lichtfleck senkrecht zur Dispersionsrichtung des Lichts dann entsprechend weit in Längsrichtung wandern, bis am Detektor 24 eine Leistungsänderung auftritt.

**Fig. 4** zeigt einen Lichtwellenleiter **30** mit Kern **31** und Mantel **32**. Mit Ausnahme eines innerhalb des Kerns 31 liegenden. Eintrittsfensters oder -fläche 33 ist die lichteintrittsseitige Stirnseite des Lichtwellenleiters 30 mit einer aufgedampften lichtundurchlässigen Metallschicht 34 versehen. Diese lichtundurchlässige Metallschicht 34 dient als Blende, so daß Licht in den Lichtwellenleiter 30 nur über die Eintrittsfläche 33 einkoppeln kann.

## Patentansprüche

1.  Optisches Spektrometer, insbesondere optischer Spektrum-Analysator (20), mit einem Ausgangsspalt dessen Breite die Wellenlängenauflösung bestimmt, und mit einem Lichtwellenleiter (30) für das durch den Ausgangsspalt hindurchtretende Licht wobei an einem Ende des Lichtwellenleiters ein Detektor angeordnet ist, **dadurch gekennzeichnet, daß** der Lichtwellenleiter (30) einen Kern (31) besitzt, und daß der Ausgangsspalt durch eine Eintrittsfläche (33) auf der Endfläche des Kerns des Lichtwellenleiters (30) gebildet ist, und daß die Eintrittsfläche (33) für das in den Kern (31) des Lichtwellenleiters (30) einzukoppelnde Licht eben ist, wobei die Breite der Eintrittsfläche (33) in Richtung der Wellenlängendispersion schmaler als der Kerndurchmesser (d) des Lichtwellenleiters (30) ist und durch eine aufgedampfte lichtundurchlässige Metallschicht (34) begrenzt ist.

2.  Optisches Spektrometer nach Anspruch 1, **dadurch gekennzeichnet, daß** um die Eintrittsfläche (33) herum das Ende des Lichtwellenleiters (30) jeweils seitlich bis auf die Eintrittsfläche (33) abgeschrägt ist.

3.  Optisches Spektrometer nach Anspruch 2, **dadurch gekennzeichnet, daß** das Ende des Lichtwellenleiters (30) so abgeschrägt ist, daß in die Schrägflächen (14) einfallendes Licht nicht im Kern (11) des Lichtwellenleiters (30) weitergeführt wird.

4.  Optisches Spektrometer, insbesondere optischer Spektrum-Analysator (20), mit einem Ausgangsspalt dessen Breite die Wellenlängenauflösung bestimmt und mit einem Lichtwellenleiter (30) für das durch den Ausgangsspalt hindurchtretende Licht, wobei an einem Ende des Lichtwellenleiters ein Detektor angeordnet ist **dadurch gekennzeichnet, daß** der Lichtwellenleiter (30) einen Kern (31) besitzt und
    **daß** der Ausgangsspalt durch das lichteintrittsseitige Ende eines Lichtwellenleiters (10) gebildet ist, und daß die Eintrittsfläche (15) für das in den Kern (11) des Lichtwellenleiters (10) einzukoppelnde Licht eben ist wobei die Breite der Eintrittsfläche (15) in Richtung der Wellenlängendispersion schmaler als der Kerndurchmesser (d) des Lichtwellenleiters (10) ist und um die Eintrittsfläche (15) herum das Ende des Lichtwellenleiters (10) jeweils seitlich bis auf die Eintrittsfläche (15) so abgeschrägt ist, daß in die Schrägflächen (14) einfallendes Licht nicht im Kern (11) des Lichtwellenleiters (10) weitergeführt wird.

5.  Optisches Spektrometer nach Anspruch 4, **dadurch gekennzeichnet, daß** die Eintrittsfläche (15) rechteckig ausgebildet ist und das Ende des Lichtwellenleiters (10) nur an den beiden Längsseiten der Eintrittsfläche (15) abgeschrägt ist.

6.  Optisches Spektrometer nach einem der vorhergehenden Ansprüche, **dadurch gekennzeichnet, daß** das Ende des Lichtwellenleiters (10 ; 30) symmetrisch bezüglich einer Axialebene des Lichtwellenleiters (10 ; 30) ist.

7.  Optisches Spektrometer nach einem der vorhergehenden Ansprüche, **dadurch gekennzeichnet, daß** die länge der Eintrittsfläche (15; 33) senkrecht zur Richtung der Wellenlängendispersion mindestens so lang wie der Kerndurchmesser (d) des Lichtwellenleiters (10 ; 30) ist.

**Claims**

1. Optical spectrometer, in particular optical spectrum analyzer (20), comprising an exit slit whose width determines the wave length resolution, and a light waveguide (30) for the light penetrating through the exit slit, wherein a detector is disposed at one end of the light waveguide, **characterized in that** the light waveguide (30) has a core (31) and that the exit slit is formed by an entering area (33) on the end face of the core of the light waveguide (30), and that the entering area (33) for the light to be coupled into the core (31) of the light waveguide (30) is flat, wherein the width of the entering area (33) is narrower in the direction of wave,length dispersion than the core diameter (d) of the light waveguide (30) and is limited by a vapor deposited opaque metal layer (34).

2. Optical spectrometer according to claim 1, **characterized in that** around the entering area (33), the end of the light waveguide (30) is sloped up to the entering area (33) on each side.

3. Optical spectrometer according to claim 2, **characterized in that** the end of the light waveguide (30) is sloped such'that light entering into the sloped surfaces (14) is not further guided in the core (11) of the light waveguide (30).

4. Optical spectrometer, in particular optical spectrum analyzer (20) comprising an exit slit whose width determines the wave length resolution and a light waveguide (30) for the light penetrating through the exit slit, wherein a detector is disposed at one end of the light waveguide, **characterized in that** the light waveguide (30) has a core (31) and that the exit slit is formed by the end of a light waveguide (10) through which the light enters, and that the entering area (15) for the light to be coupled into the core (11) of the light waveguide (10) is flat, wherein the width of the entering area (15) is narrower in the direction of the wave length dispersion than the core diameter (d) of the light waveguide (10) and the end of the light waveguide (10) around the entering area (15) is laterally sloped up to the entering area (15) such that light entering into the sloped surfaces (14) is not further guided in the core (11) of the light waveguide (10).

5. Optical spectrometer according to claim 4, **characterized in that** the entering area (15) is designed rectangularly and that the end of the light waveguide (10) is sloped only'on both longitudinal sides of the entering area (15).

6. Optical spectrometer according to any one of the preceding claims, **characterized in that** the end of the light waveguide (10;30) is symmetrical with respect to an axial plane of the light waveguide (10;30).

7. Optical spectrometer according to any one of the preceding claims, **characterized in that** the length of the entering area (15;33), perpendicular to the direction of the wave length dispersion, is at least as long as the core diameter (d) of the light waveguide (10;30).

**Revendications**

1. Spectromètre optique, notamment analyseur optique de spectres (20), comportant une fente de sortie, dont la largeur détermine la résolution des longueurs d'onde, et un guide d'ondes optiques (30) pour la lumière traversant la fente de sortie, un détecteur étant disposé à une extrémité du guide d'ondes optiques **caractérisé en ce que** le guide d'ondes optiques (30) possède un coeur (31) et que la fente de sortie est formée par une surface d'entrée (33) dans le plan de la surface du coeur du guide d'ondes optiques (30), et que la surface d'entrée (33) pour la lumière devant être injectée dans le coeur (31) du guide d'ondes optiques (30), est plane, la largeur de la surface de sortie (33) dans la direction de la dispersion des longueurs d'onde étant inférieure au diamètre (d) du coeur du guide d'ondes optiques et étant délimitée par une couche métallique (38) déposée par évaporation et opaque.

2. Spectromètre optique selon la revendication 1, **caractérisé en ce qu'**autour de la surface d'entrée (33), l'extrémité du guide d'ondes optiques (30) est respectivement biseautée latéralement hormis la surface d'entrée (33).

3. Spectromètre optique selon la revendication 2, **caractérisé en ce que** l'extrémité du guide d'ondes optiques est biseautée de telle sorte que la lumière, qui pénètre dans les surfaces obliques (14) n'est pas transmise dans le coeur (11) du guide d'ondes optiques (30).

**4.** Spectromètre optique, notamment analyseur optique de spectres (20), comportant une fente de sortie, dont la largeur détermine la résolution des longueurs d'onde, et un guide d'ondes optiques (30) pour la lumière traversant la fente de sortie, un détecteur étant disposé à une extrémité du guide d'ondes optiques **caractérisé en ce que** le guide d'ondes optiques (30) possède un coeur (31) et que la fente de sortie est formée par l'extrémité, située du côté entrée de la lumière, du guide d'ondes optiques (10) et que la surface d'entrée (15) pour la lumière devant être injectée dans le coeur (11) du guide d'ondes optiques (10) est plane, la largeur de la surface d'entrée (15) dans la direction de la dispersion des longueurs d'onde étant inférieure au diamètre (d) du coeur du guide d'ondes optiques (10) et l'extrémité du guide d'ondes optiques (10) étant biseautée latéralement autour de la surface d'entrée (15), hormis la surface d'entrée (15) de telle sorte que la lumière, qui pénètre dans les surfaces obliques (14), n'est pas transmise dans le coeur (11) du guide d'ondes optiques (10).

**5.** Spectromètre optique selon la revendication 4, **caractérisé en ce que** la surface d'entrée (15) est agencée avec lune forme rectangulaire et que l'extrémité du guide d'ondes optiques (10) est biseautée uniquement sur les deux côtés longitudinaux de la surface d'entrée (15).

**6.** Spectromètre optique selon l'une des revendications précédentes, **caractérisé en ce que** l'extrémité du guide d'ondes optiques (10; 30) est symétrique par rapport à un plan axial du guide d'ondes optiques (10; 30).

**7.** Spectromètre optique selon l'une des revendications précédentes, **caractérisé en ce que** la longueur de la surface d'entrée (15; 30) perpendiculairement à la direction de la dispersion des longueurs d'onde est égale au moins au diamètre (d) du coeur du guide d'ondes optiques (10; 30).

# Fig. 1

10

15

13

14

11

14

12

# Fig. 2

13,15

α

14

14

11

12

d

D

## Fig. 3

## Fig. 4